(19)

Europäisches
Patentamt
European
Patent Office
Office européen
des brevets

(11) **EP 3 522 452 B1**

(12) **EUROPEAN PATENT SPECIFICATION**

(45) Date of publication and mention
of the grant of the patent:
**18.11.2020  Bulletin 2020/47**

(51) Int Cl.:
***H04L 12/24*** *(2006.01)*

(21) Application number: **19153578.0**

(22) Date of filing: **24.01.2019**

(54) **VERIFYING NETWORK INTENTS**

VERIFIZIERUNG VON NETZWERKABSICHTEN

VÉRIFICATION D'INTENTIONS DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2018  US 201815885202**

(43) Date of publication of application:
**07.08.2019  Bulletin 2019/32**

(73) Proprietor: **Hewlett Packard Enterprise
Development LP
Houston, TX 77070 (US)**

(72) Inventors:
• **Kang, Joon Myung**
  **Palo Alto, CA 94304 (US)**
• **Wang, Huazhe**
  **Palo Alto, CA 94304 (US)**
• **Sharma, Puneet**
  **Palo Alto, CA 94304-1100 (US)**

(74) Representative: **Haseltine Lake Kempner LLP
Redcliff Quay
120 Redcliff Street
Bristol BS1 6HU (GB)**

(56) References cited:
**US-A1- 2016 241 436     US-A1- 2017 346 684**

• **AREZOUMAND SAEED ET AL: "MD-IDN:
Multi-domain intent-driven networking in
software-defined infrastructures", 2017 13TH
INTERNATIONAL CONFERENCE ON NETWORK
AND SERVICE MANAGEMENT (CNSM), IFIP, 26
November 2017 (2017-11-26), pages 1-7,
XP033297550, DOI:
10.23919/CNSM.2017.8256016 [retrieved on
2018-01-12]**
• **HARES HUAWEI S: "Intent-Based Nemo
Overview; draft-hares-ibnemo-overview-01.txt",
INTENT-BASED NEMO OVERVIEW;
DRAFT-HARES-IBNEMO-OVERVIEW-01.TXT,
INTERNET ENGINEERING TASK FORCE, IETF;
STANDARDWORKINGDRAFT, INTERNET
SOCIETY (ISOC) 4, RUE DES FALAISES CH- 1205
GENEVA, SWITZERLAND, 20 October 2015
(2015-10-20), pages 1-23, XP015109459,
[retrieved on 2015-10-20]**

**Description**

BACKGROUND

Modern networks include different kinds of network devices, both physical and virtual, that may have multiple network functions and dynamic states. Intent-based management has been developed to manage networks by using network intents which are a desired outcome driven by business objectives in terms of "what we need" for a target network instead of low level implementations (i.e., "how to do") to increase scalability and flexibility.

US2016241436 discloses a device including a network interface, a non-transitory computer readable medium having executable instructions thereon, and a processor coupled to the network interface and the computer readable medium. The executable instructions cause the processor to receive an Intent representing requirements for data traffic on a network having a plurality of endpoints, with the Intent specifying one or more traffic parameters identifying one or more of the endpoints, and at least one first service. The executable instructions also include instructions to generate one or more networking commands identifying the at least one first service according to the traffic parameters, send the networking commands to one or more network devices on the network and cause the network devices to perform the at least one first service on a first data transmission in response to parameters of the data transmission satisfying the one or more networking commands.

US10374872 discloses that one or more network devices can be configured to provide a desired network service according to declarative requirements. A specification of an intent that identifies a desired service and a reference architecture is received. For example, one or more network devices are configured to provide a network service desired according to declarative requirements. The desired service is rendered to provide instructions for dispatch to a plurality of devices having roles. For example, the reference architecture identifies a network topology and one or more protocols to be utilized to provide an intended network service. Rendering the desired service includes invoking a service rendering program function based on the reference architecture and a role of a specific device. A new reference architecture may be implemented by specifying a new service rendering program function for the new reference architecture.

The paper "MD-IDN: Multi-domain intent-driven networking in software-defined infrastructures" by Saeed Arezoumand *et al* presents MD-IDN, which provides an intent framework for the users of multi-domain cloud infrastructures. The paper first proposes a graph-based abstraction model for user-defined intents and a generic intent compilation process. Then, it proposes compilation algorithms to achieve scalability in multi-domain networks: First, user-defined intents get processed over an abstracted multi-graph of network domains and their interconnections, and a set of local intents will be generated for each of the involved domains. Afterwards, the local intents will be compiled and installed in local regions in parallel.

The document "Intent-Based Nemo Overview; draft-hares-ibnemo-overview-01.txt by S. Hares of Huawei, published by the Internet Engineering Task Force, describes the IB-NEMO language as consisting of commands exchanged between an application and a network manager/controller.

BRIEF DESCRIPTION OF THE DRAWINGS

Various examples will be described below by referring to the following figures:

FIG. 1A is a block diagram of an example network intent verification system;

FIG. 1B is a block diagram of an example system for verifying network intents in a stateful network;

FIG. 2 is an example flowchart of a method for verifying network intents in a stateful network;

FIG. 3 is an example network intent using a graph model;

FIG. 4 is an example block diagram of a segmentation for decomposing a network intent;

FIG. 5 is an example block diagram of extensions for a data modeling language for normalization of network configurations;

FIG. 6 is an example network graph for two network functions; and

FIG. 7 is an example block diagram of slicing for decomposing a network intent.

Throughout the drawings, identical reference numbers designate similar, but not necessarily identical, elements.

The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

DETAILED DESCRIPTION

Network administrators or operators may configure a managed network based on business goals or requirements using a set of network policies (e.g., security, performance, authentication, fault, etc.). However, these network policies are typically written with low-level identifiers (e.g., IP/Mac address, network protocols, etc.) to configure devices in the network. A low-level configuration defines "how" to configure the network (e.g., each network device) to accomplish the objective. For example, to configure a wireless network using low-level configurations or information to allow temporary visitors to access the network, all access points have to be configured manually with subtext information, access controls, performance metrics, etc. Low-level configurations may be difficult to maintain as the size of the network increases. To overcome these limitations, intent-based management has been developed to manage networks using network intents as the input from an administrator or operator. A network intent is a high level business policy or objective, namely, "what we need" for the target network. For example, to configure a wireless network to allow temporary access to the network, a network intent "configure networks for guests" may be defined without specifying all of the low-level configurations. A network intent will not need to be changed because of changes to the target network such as increasing the number of access points. The methods described herein may be carried out by a processor or computer. A computer readable storage medium may be provided, the computer readable storage medium comprising instructions which, when executed by a computer or processor, cause the computer or processor to carry out the methods described herein.

Networks may include a large number of network devices which may have multiple network functions and dynamic states. For intent-based management of a network, application of network intents involves the translation of the network intents to low-level configurations for each device. Typically, network intents may be expressed with technology-agnostic terms such as logical labels/tags (e.g., "configure networks for guests") and low-level configurations may be implemented with technology-specific data such as IP/Mac address, CLI network command, etc. A network intent verification system and method may be provided to verify whether the current network configurations and rules can satisfy the given set of network intents. The verification system and method may, for example, use network intents from administrators and the current network configurations from the network devices. Accordingly, network administrators may check for violations of the desired network intents with the configurations of the target network. In one example, the network intent verification system and method may be used to check if the network intents are correctly translated or that the target network is working in an intentional manner. For example, for a network intent to allow Internet access from any device in a guest network, all network devices such as switches or firewalls should be set up to allow http/https traffic for any device in the guest network to the Internet. Devices may be dynamically presented in the guest network and may require a determination as to whether the low-level configurations are violated against the original network intent. In another example, the network intent verification system and method may be used to determine if the current configuration of the network devices are satisfying the network intents (e.g., if there is a change in the configuration of a network device for optimization such as optimizing by reducing overlapping header spaces).

A method for verifying network intents may comprise decomposing at least one network intent into a plurality of sub-verification tasks using a set of labels that define the network intent, generating a set of normalized configurations for a plurality of network devices in a target network based on a set of current configurations for the plurality of network devices, wherein generating the set of normalized configurations comprises converting the set of current configurations to the set of normalized configurations using a data modeling language, and generating a network graph based on the set of normalized configurations and a topology of the target network. The method may further comprise analyzing the plurality of sub-verification tasks and the network graph to determine if the set of current configurations for the plurality of network devices satisfies the at least one network intent. If the at least one network intent is not satisfied, a report may be generated indicating that the target network is not in compliance. If the at least one network intent is satisfied, information may be provided indicating that target network is in compliance.

A system for verifying network intents may comprise a decomposer to decompose at least one network intent into a plurality of sub-verification tasks using a set of labels that define the network intent, a configuration normalizer to generate a set of normalized configurations for a plurality of network devices in a target network based on a set of current configurations for the plurality of network devices by converting the set of current configurations to the set of normalized configurations using a data modeling language and a network graph builder coupled to the configuration normalizer. The network graph builder may be used to generate a network graph based on the set of normalized configurations and topology of the target network. The system may further comprise an SMT solver coupled to the decomposer and the network graph builder. The SMT solver may be used to analyze the set of normalized configurations and the network graph to determine violations of the at least one network intent by the set of current configurations for the plurality of network devices. The system may further comprise a violation analyzer coupled to the SMT solver. The violation analyzer may be used to generate a report identifying the violations.

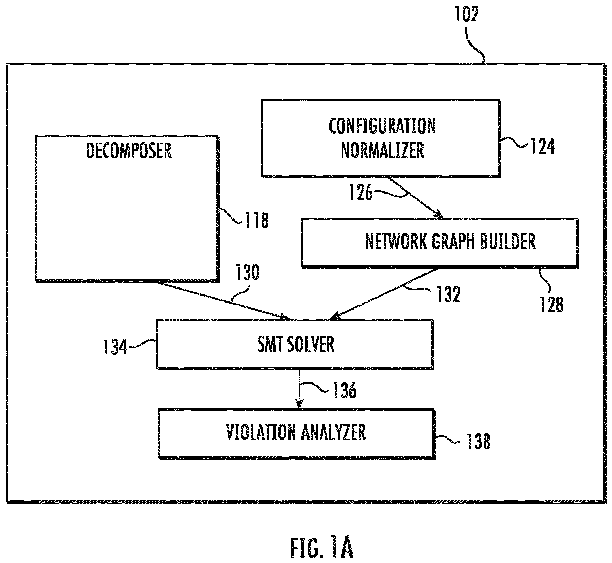

FIG. 1A is a block diagram of an example network intent verification system. Network intent verification system 102 is used to verify whether the current topology and configurations of a target network (not shown) are in compliance with the network intents defined by an administrator. Network intent verification system 102 includes a decomposer 118, a configuration normalizer 124, a network graph builder 128, an SMT (Satisfiability Modulo Theories) solver 134 and a violation analyzer 138. Operation of the network intent verification system 102 is described below.

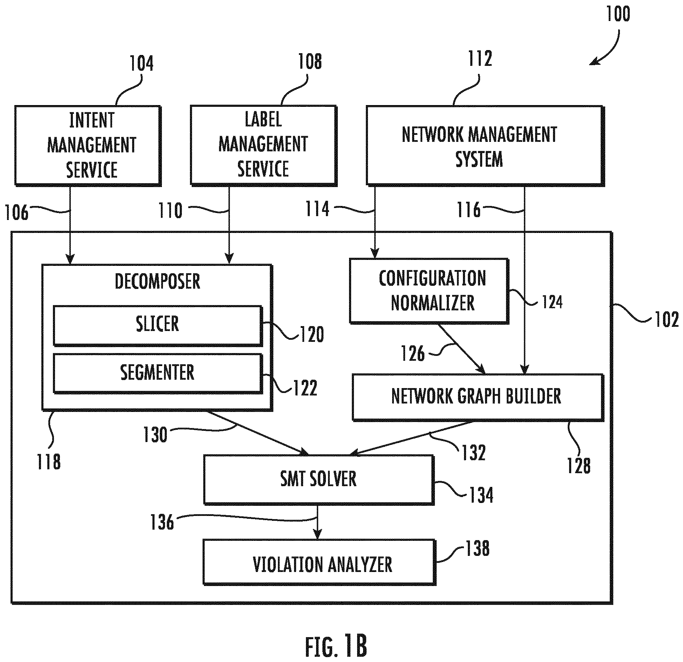

FIG. 1B is a block diagram of an example system for verifying network intents in a stateful network. FIG. 1 shows a stateful network 100 utilizing intent-based management. A network intent verification system 102 is used to verify whether the current topology and configurations of the network 100 are in compliance with the network intents. Network intent verification system 102 may, for example, identify any violations, analyze the violations and generate a report regarding the violations. Network intent verification system 102 is coupled to and configured to receive inputs from an intent management service 104, a label management service 108 and a network management system 112.

Intent management service 104 is used by an administrator or operator to define network intents using logical labels rather than using low-level identifiers (e.g., IP/Mac addresses, machine ID, network protocols, etc.). A network intent may also be restricted by certain conditions (e.g., ACL rules, service type). The use of logical labels may provide a better abstraction and portability to the network intent expression and deployment. For example, a user A may have multiple network devices each of which has its own IP address. Without a logical label, all policies must be defined for all of the network devices of user A. However, a network intent may be defined using a logical label with the label "user A." If, for example, the IP addresses of the network device are changed dynamically, the logical-label based network intent does not need to be updated to reflect the new IP addresses.

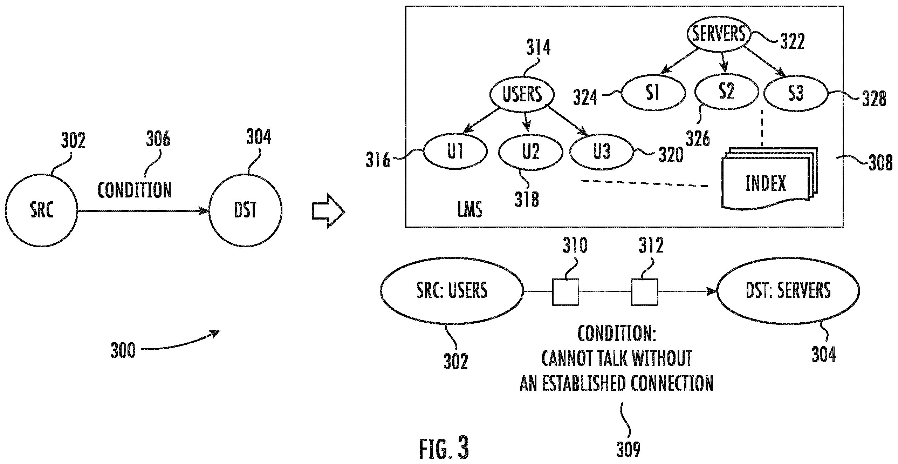

FIG. 3 shows an example network intent using a graph model. In FIG. 3, an example network intent 300 is shown using a Policy Graph Abstraction (PGA). A PGA may use logical labels which have a hierarchical relation from a label management service (LMS) 108 (shown in FIG. 1). In FIG. 3, a set of labels 308 and the hierarchical relation of the labels from an LMS are shown. Specifically, the set of labels includes the labels users 314, U1 316, U2 318, U3 320, servers 322, S1 324, S2 326 and S3 328. These labels 308 are used to define a network intent 300 for access control between a source 302 (e.g., users) and a destination 304 (e.g., servers) with a condition 306. A condition 306 may be, for example, reachability, isolation, waypoint, multipath consistency, locality, temporal logic, etc. In the example network intent 300 in FIG. 3, any user 302 (e.g., a device) may access the server 304 through a firewall 310 and NAT 312 with the condition 309 that the source 302 and destination 304 cannot communicate without an established connection. Returning to FIG. 1, the network intents 106 defined by the internet management service 104 are provided as an input to the network intent verification system 102.

The label management service 108 may be used to manage available logical labels, to map the labels to real low-level addresses (e.g., IP/Mac addresses or machine ID) or other low-level instantiation information and to update labels dynamically. Labels 110 from the label management service 108 are provided as an input to the network intent verification system 102. For example, the example labels in FIG. 3 are for users 314, servers 322 and their hierarchical relationship. The network management system 112 provides as inputs to the network intent verification system 102 all current configurations 114 for network devices, for example, switches or firewalls, and a whole network topology 116 which includes all connected links.

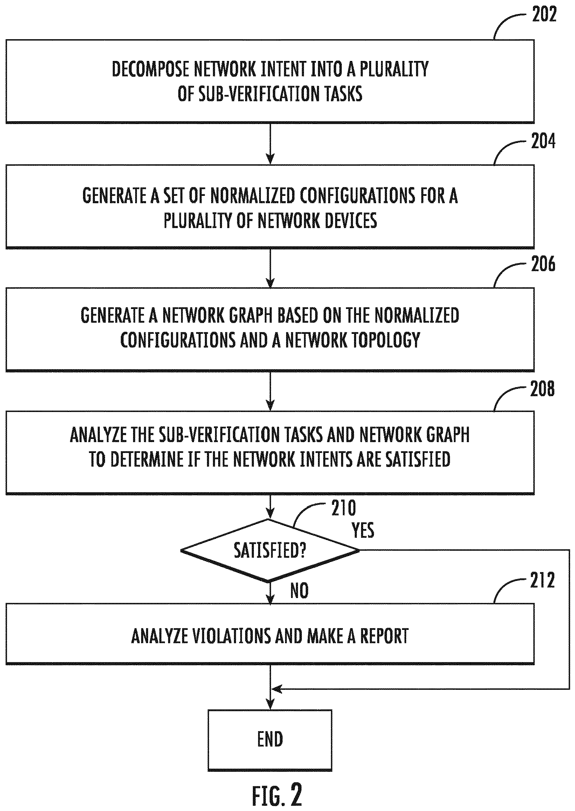

Network intent verification system 102 includes a decomposer 118, a configuration normalizer 124, a network graph builder 128, an SMT (Satisfiability Modulo Theories) solver 134 and a violation analyzer 138. Decomposer 118 receives as inputs the network intents 106 from intent management service 104 and label information 110 from label management service 108. Decomposer 118 is configured to decompose the network intents into multiple sub-verification tasks 130 that are provided as an input to the SMT solver 134. The sub-verification tasks 130 are generated by the decomposer 118 using slicing and segmentation. Accordingly, decomposer 118 may include a slicer 120 and a segmenter 122. Slicer 120 is configured to identify what portions of the network intent to check for intent verification. The process of slicing a network intent is described further below with respect FIG. 2. Segmenter 122 is configured to further reduce the size of the verification task by dividing the network into multiple segments which do not have any dependency. The process of segmentation is described further below with respect to FIG. 2.

The configuration normalizer 124 receives current configurations 114 for the network devices in a target network from the network management system 112 and converts the current configurations 114 into normalized configuration 126 using a data modeling language (for example, YANG) to create a common information model. The normalized configurations 126 are input to a network graph builder 128. The network graph builder 128 is configured to construct a graph model based on the normalized configurations 126 and the topology 116 provided from the network management system 112. In an example, the network graph builder 128 builds a first order logic representation graph model 132 of the network that is provided as an input to the SMT solver 134. The SMT solver 134 is configured to check for violations using the sub-verification tasks 130 and the graph model 132. In an example, the SMT solver 134 is a Z3 SMT solver. If the SMT solver 134 identifies a violation of the network intents (e.g., the current configuration is not in compliance with the network intents), the SMT solver 134 will provide the violations to the violation analyzer 138. If ether is no violation, the network verification system 102 may provide information indicating the target network is verified. The violation analyzer 138 is configured to analyze any violation(s) 136 and to generate a report that may be, for example, used by an administrator to find a root cause for the violation(s).

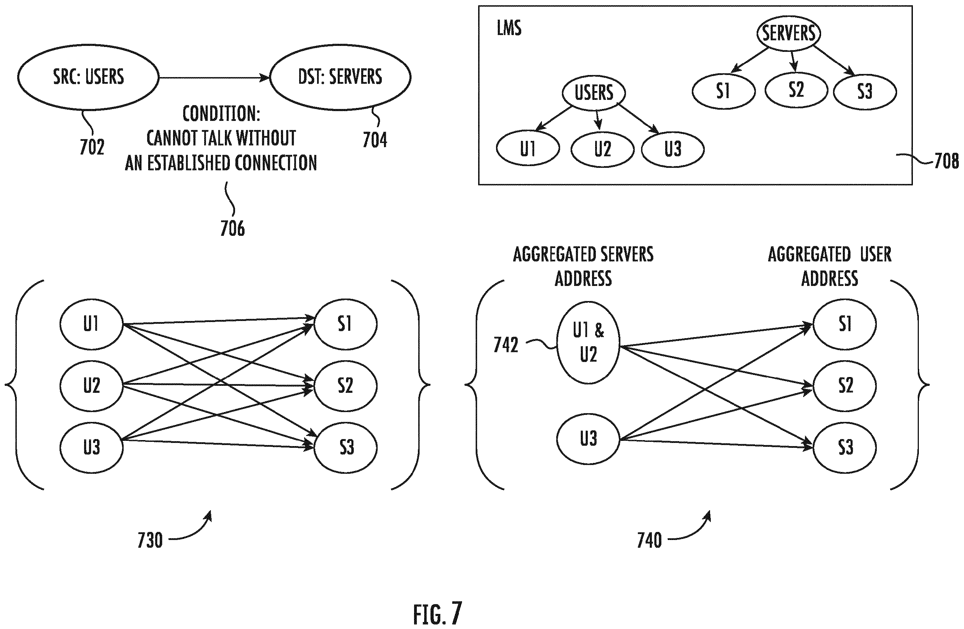

FIG. 2 is an example flowchart of a method for verifying network intents in a stateful network. The example method shown in FIG. 2 may be implemented by, for example, a network intent verification system 102 as described above with respect to FIG. 1. The verification method may be performed, for example, each time a new network intent is configured and put into a network by the intent management service, when a change is made to a network intent or when a change is made to the topology of a network. In another example, an administrator may schedule the verification method to be performed periodically, e.g., every five minutes. At block 202, network intents are decomposed into a plurality of sub-verification tasks using, for example, network intents from an intent management service and label information from a label management service. Label information and end hosts may be extracted from the label management service. In one example, a network intent is decomposed using slicing and segmentation. Slicing identifies what portions of the network intent to check for intent verification. A slicing operation divides verification tasks by address spaces for the source and destination nodes. For example, label information and end host lists may be extracted from an LMS and used to convert the network intent into sub-verification tasks. Each slice may be shared with the reachability within a set of end hosts. FIG. 7 is an example block diagram of slicing for decomposing a network intent. In FIG 7, an example network intent 700 is shown for access control from users 702 to servers 704 with the condition 706 that users 702 cannot access servers 704 without an established connection. A slicing operation is used to determine how many possible verification tasks are between a source 702 and destination 704 node in the network intent 700. A set of labels or label tree 708 from an LMS shows there are three users (U1, U2 and U3) and three servers (S1, S2 and S3). The label tree 708 is used to determine what needs to be verified for the given network intent 700. In one example, if U1 and U2 are sharing address spaces, the result 740 for the slicing may include a slice for the nodes U1 and U2 as one source 742. In the result 740, there are six verification tasks (U1/U2 to S1, U1/U2 to S2, U1/U2 to S3, U3 to S1, U3 to S2 and U3 to S3). In another example, if there is no shared address between nodes, the result 730 of the slicing operation includes all slices for the combinations between users (U1, U2 and U3) and servers (S1, S2 and S3). In FIG. 7, there are nine verification tasks in the result 730 (U1 to S1, U1 to S2, U1 to S3, U2 to S1, U2 to S2, U2 to S3, U3 to S3, U3 to S2 and U3 to S3).

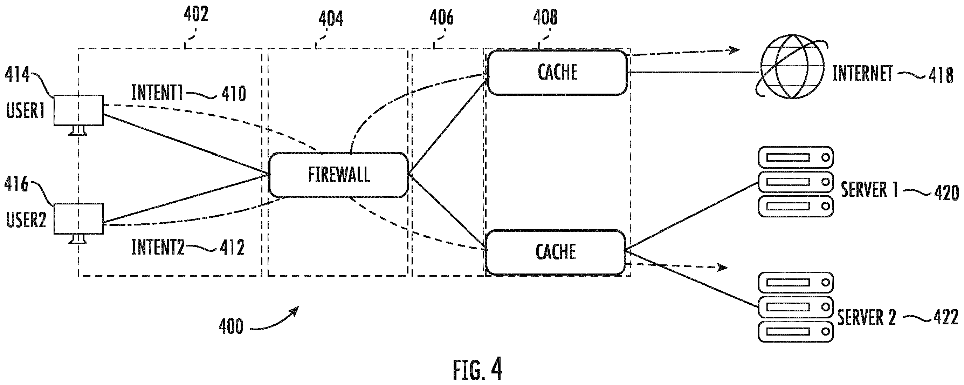

Segmentation further reduces the size of the verification task by dividing the target network into multiple segments which do not have any dependency. If any previous node's state affects the next node, it has a dependency. Each segment may then be verified step-by-step as discussed further below. FIG. 4 is an example block diagram of a segmentation for decomposing a network intent. In FIG. 4, the example segmentation 400 involves a first network intent 410 and a second network intent 412 for sources (e.g., users 414, 416) and destinations (e.g., Internet 418, servers 420, 422). The segmentations 400 is divided into four segments based on a tasks connectivity and a functional block which does not have any dependency: 1)Users-Firewall 402, 2) Firewall 404, 3) Firewall-Cache 406 and 4) Cache 408. Instead of verifying the entire intent (e.g., the entire path from User1 414 to Server 2 422 through Firewall and Cache with one verification task), a sub-verification task for each segment 402, 404, 406, 408 may be performed step-by-step to reduce processing time. If there is any violation during the verification, the remaining verification tasks for the remaining segments do not need to be performed. The results of the slicing and segmentation converts (or decomposes) the network intent(s) into a plurality of sub-verification tasks.

Returning to FIG. 2, at block 204 a set of normalized configurations for a plurality of network devices from multiple vendors in the target network is generated based on a set of current configurations for the plurality of network devices. The configurations for network functions (or middleboxes may vary across devices and vendors. For example, firewall devices from different vendors may have a syntactically different command to block a suspicious packet but the semantic is the same. Accordingly, different syntaxes for the low-level configurations of the network functions (or middleboxes) are converted to a set of normalized configurations using a data modeling language to create a common information model. In one example, a set of mapping rules between the low-level configurations and normalized configurations may be created manually. The common information model allows different configuration formats for network devices, such as network functions, to be normalized to create a standard representation of the network function configurations. The normalized configurations may allow support of third party tools which analyze and validate configuration data. In one example, the data modeling language may be a data modeling language commonly used such as the YANG language proposed by IETF such as OpenConfig YANG that may be modified (or extended) to support network function configurations

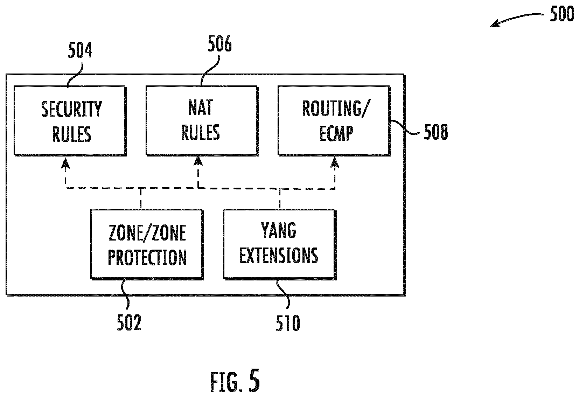

Extensions to the data modeling language may be designed to cover, for example, typical functions for both simple open source and advanced commercial network functions. FIG. 5 is an example block diagram of extensions for a data modeling language for normalization of network configurations. The extensions 500 include the following function units: Zone 502, Security Rules 504, NAT Rules 506, Routing/ECMP 508 and YANG extensions 510. The design of the Zone 502 function unit may be a security zone component with policy rules that are applied between zones. A zone is a grouping of interfaces (physical or virtual) that represents a segment of the network that is connected to, and controlled by the network function. Security Rules 504 are individual policy rules that determine whether to block or allow a session based on traffic attributes such as the source and destination security zone, the source and destination IP address, the application and the service. The NAT Rules 506 allow the translation of private, non-routable IPv4 addresses to one or more globally-routable IPv4 addresses thereby conserving an organizations routable IP addresses. The NAT rules allow the prevention of the disclosure of the real IP addresses of hosts that need access to public addresses and to manage traffic by performing port forwarding. For the Routing/ECMPO 508, equal cost multiple path (ECMP) processing is a network feature that uses multiple equal-cost routed to the same destination. The YANG extension 510 are other necessary extension that may be added into the existing YANG model.

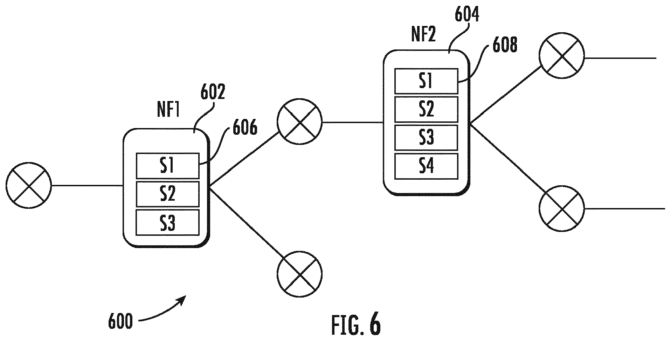

Returning to FIG.2, at block 206 a network graph of the target network is generated (or built) based on the normalized configurations and a network topology provided by, for example, a network management system. In an example, the network graph is a first order logic representation graph model of the target network. The network graph includes nodes and edges where, for example, the nodes may represent network devices such as a switch or network function (e.g., a firewall, load balancer) and the edges indicate the connections between nodes. The network graph may, for example, provide all connectivity and consistency information with first order logic. FIG. 6 is an example network graph for two network functions. In FIG. 6, the network graph 600 includes a first network function 602 with three states and a second network function 604 with four states. The network graph 600 may provide consistency information of the states between two network functions for verification. In an example, a first state 606, S1, of the first network function 602 may be consistent with a second state 608, S2, of the second network function 604 and may be checked concurrently or simultaneously.

Returning to FIG. 2, at block 208 the set of sub-verification tasks and the network graph are analyzed to determine if the current configurations for the plurality of network devices satisfy the network intents. In one example, an SMT solver may be used to check for violations of the network intents. The SMT solver may utilize a formula built using the sub-verification tasks and the network graph in the analysis to identify whether the current configurations of the network devices are in compliance with the network intents (i.e., to identify any violations). An example formula that may be analyzed by the SMT solver is:

$$\mathbf{F} = \mathbb{N} \wedge \neg \, \mathbb{P} \qquad\qquad \text{Eqn. 1}$$

Where N is the sub-verification tasks and P is the normalized configurations. In an example, each of the normalized configurations may be tagged with a corresponding network intent using the data modeling language (e.g., YANG). The tags may be used to trace back the intent that generates the configuration. If the SMT solver determines that there are no violations (i.e., the network intents are satisfied by the current configurations) at block 210, information may be provided to, for example, an administrator, that indicates the target network is verified. If the SMT solver identifies a violation or multiple violations at block 210, the SMT solver may, for example, generate a counter example that identifies the problematic configuration. At step 212, the violation(s) may be analyzed and a report generates that may be used by, for example, an administrator to identify a root cause of the violation(s).

Although the present disclosure has been described with reference to example implementations, workers skilled in the art will recognize that changes may be made in form and detail without departing from the scope of the claimed subject matter. For example, although different example implementations may have been described as including one or more features providing one or more benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

**Claims**

1.  A method for verifying network intents comprising:

    decomposing (202) at least one network intent into a plurality of sub-verification tasks using a set of labels that define the network intent;
    generating (204) a set of normalized configurations for a plurality of network devices in a target network based on a set of current configurations for the plurality of network devices, wherein generating the set of normalized configurations comprises converting the set of current configurations to the set of normalized configurations using a data modeling language;

generating (206) a network graph based on the set of normalized configurations and a topology of the target network;

analyzing (208) the plurality of sub-verification tasks and the network graph to determine if the set of current configurations for the plurality of network devices satisfies the at least one network intent;

if the at least one network intent is not satisfied, generating (212) a report indicating that the target network is not in compliance; and

if the at least one network intent is satisfied, providing information indicating that target network is in compliance.

2. The method according to claim 1, wherein decomposing at least one network intent further comprises slicing the at least one network intent into a plurality of portions for verification.

3. The method according to claim 2, wherein decomposing the at least one network intent further comprises segmenting the target network into a plurality of segments.

4. The method according to claim 1, wherein the data modeling language is YANG.

5. The method according to claim 1, wherein data modeling language includes at least one extension directed to at least one function of a network function.

6. The method according to claim 1, wherein a Satisfiability Modulo Theories, SMT, solver is used to analyze the set of sub-verification tasks and the network graph to determine if the set of current configurations for the plurality of network devices satisfies the at least one network intent.

7. The method according to claim 1, wherein decomposing at least one network intent into a plurality of sub-verification tasks includes receiving the at least one network intent and receiving the set of labels.

8. The method according to claim 7, wherein the at least one network intent is defined by an intent management service and the set of labels are generated by a label management service.

9. The method according to claim 1, wherein the set of current network configurations and the topology of the target network are provided by a network management system.

10. A system for verifying network intents comprising:

a decomposer (118) to decompose at least one network intent into a plurality of sub-verification tasks using a set of labels that define the network intent;

a configuration normalizer (124) to generate a set of normalized configurations for a plurality of network devices in a target network based on a set of current configurations for the plurality of network devices by converting the set of current configurations to the set of normalized configurations using a data modeling language;

a network graph builder (128) coupled to the configuration normalizer, the network graph builder to generate a network graph based on the set of normalized configurations and a topology of the target network;

a Satisfiability Modulo Theories, SMT, solver (134) coupled to the decomposer and the network graph builder, the SMT solver to analyze the set of normalized configurations and the network graph to determine violations of the at least one network intent by the set of current configurations for the plurality of network devices; and

a violation analyzer (138) coupled to the SMT solver, the violation analyzer to generate a report identifying the violations.

11. The system according to claim 10, wherein the decomposer receives the at least one network intent from an intent management service.

12. The system according to claim 10, wherein the decomposer receives the set of labels from a label management service.

13. The system according to claim 10, wherein the configuration normalizer receives the set of current network configurations from a network management system and wherein the network graph builder receives the topology of the target network from a network management system.

14. A computer readable storage medium comprising instructions which, when executed by a computer, cause the computer to carry out the method according to any of claims 1 to 9.

**Patentansprüche**

1. Verfahren zum Überprüfen von Netzwerkabsichten, das Folgendes umfasst:

   Zerlegen (202) von wenigstens einer Netzwerkabsicht in mehrere Unterüberprüfungsaufgaben unter Verwendung eines Satzes von Etiketten, die die Netzwerkabsicht definieren;
   Erzeugen (204) eines Satzes von normalisierten Konfigurationen für mehrere Netzwerkvorrichtungen in einem Zielnetzwerk basierend auf einem Satz von aktuellen Konfigurationen für die mehreren Netzwerkvorrichtungen, wobei das Erzeugen des Satzes von normalisierten Konfigurationen ein Konvertieren des Satzes von aktuellen Konfigurationen in den Satz von normalisierten Konfigurationen unter Verwendung einer Datenmodellierungssprache umfasst;
   Erzeugen (206) eines Netzbildes basierend auf dem Satz von normalisierten Konfigurationen und einer Topologie des Zielnetzwerks;
   Analysieren (208) der mehreren Unterüberprüfungsaufgaben und des Netzbildes, um zu bestimmen, ob der Satz von aktuellen Konfigurationen für die mehreren Netzwerkvorrichtungen die wenigstens eine Netzwerkabsicht erfüllt;
   falls die wenigstens eine Netzwerkabsicht nicht erfüllt ist, Erzeugen (212) eines Berichts, der angibt, dass das Zielnetzwerk nicht konform ist; und
   falls die wenigstens eine Netzwerkabsicht erfüllt ist, Bereitstellen von Informationen, die angeben, dass das Zielnetzwerk konform ist.

2. Verfahren nach Anspruch 1, wobei das Zerlegen von wenigstens einer Netzwerkabsicht ferner ein scheibenmäßiges Schneiden der wenigstens einen Netzwerkabsicht in mehrere Anteile zur Überprüfung umfasst.

3. Verfahren nach Anspruch 2, wobei das Zerlegen der wenigstens einen Netzwerkabsicht ferner ein Segmentieren des Zielnetzwerks in mehrere Segmente umfasst.

4. Verfahren nach Anspruch 1, wobei die Datenmodellierungssprache YANG ist.

5. Verfahren nach Anspruch 1, wobei die Datenmodellierungssprache wenigstens eine Erweiterung einschließt, die auf wenigstens eine Funktion einer Netzwerkfunktion gerichtet ist.

6. Verfahren nach Anspruch 1, wobei ein Erfüllbarkeit-Modulo-Theorien(*Satisfiability Modulo Theories* - SMT)-Solver verwendet wird, um den Satz von Unterüberprüfungsaufgaben und das Netzbild zu analysieren, um zu bestimmen, ob der Satz von aktuellen Konfigurationen für die mehreren Netzwerkvorrichtungen die wenigstens eine Netzwerkabsicht erfüllt.

7. Verfahren nach Anspruch 1, wobei das Zerlegen von wenigstens einer Netzwerkabsicht in mehrere Unterüberprüfungsaufgaben ein Empfangen der wenigstens einen Netzwerkabsicht und ein Empfangen des Satzes von Etiketten einschließt.

8. Verfahren nach Anspruch 7, wobei die wenigstens eine Netzwerkabsicht durch einen Absichtsverwaltungsdienst definiert wird und der Satz von Etiketten durch einen Etikettenverwaltungsdienst erzeugt wird.

9. Verfahren nach Anspruch 1, wobei der Satz von aktuellen Netzwerkkonfigurationen und die Topologie des Zielnetzwerks durch ein Netzwerkverwaltungssystem bereitgestellt werden.

10. System zum Überprüfen von Netzwerkabsichten, das Folgendes umfasst:

    einen Zerleger (118) zum Zerlegen von wenigstens einer Netzwerkabsicht in mehrere Unterüberprüfungsaufgaben unter Verwendung eines Satzes von Etiketten, die die Netzwerkabsicht definieren;
    einen Konfigurationsnormalisator (124), um einen Satz von normalisierten Konfigurationen für mehrere Netzwerkvorrichtungen in einem Zielnetzwerk basierend auf einem Satz von aktuellen Konfigurationen für die mehreren Netzwerkvorrichtungen durch ein Konvertieren des Satzes von aktuellen Konfigurationen in den Satz von normalisierten Konfigurationen unter Verwendung einer Datenmodellierungssprache zu erzeugen;

einen Netzbildgenerator (128), der mit dem Konfigurationsnormalisator gekoppelt ist, wobei der Netzbildgenerator dazu dient, basierend auf dem Satz von normalisierten Konfigurationen und einer Topologie des Zielnetzwerks ein Netzbild zu erzeugen;

einen Erfüllbarkeit-Modulo-Theorien(SMT)-Solver (134), der mit dem Zerleger und dem Netzbildgenerator gekoppelt ist, wobei der SMT-Solver dazu dient, den Satz von normalisierten Konfigurationen zu analysieren, und das Netzbild dazu dient, Verstöße der wenigstens einen Netzwerkabsicht durch den Satz von aktuellen Konfigurationen für die mehreren Netzwerkvorrichtungen zu bestimmen; und

einen Verstoßanalysator (138), der mit dem SMT-Solver gekoppelt ist, wobei der Verstoßanalysator dazu dient, einen Bericht zu erzeugen, der die Verstöße identifiziert.

11. System nach Anspruch 10, wobei der Zerleger die wenigstens eine Netzwerkabsicht von einem Absichtsverwaltungsdienst empfängt.

12. System nach Anspruch 10, wobei der Zerleger den Satz von Etiketten von einem Etikettenverwaltungsdienst empfängt.

13. System nach Anspruch 10, wobei der Konfigurationsnormalisator den Satz von aktuellen Netzwerkkonfigurationen von einem Netzwerkverwaltungssystem empfängt und wobei der Netzbildgenerator die Topologie des Zielnetzwerks von einem Netzwerkverwaltungssystem empfängt.

14. Computerlesbares Speichermedium, das Anweisungen umfasst, die, wenn sie durch einen Computer ausgeführt werden, den Computer veranlassen, das Verfahren nach einem der Ansprüche 1 bis 9 durchzuführen.

**Revendications**

1. Procédé de vérification d'intentions de réseau comprenant :

la décomposition (202) d'au moins une intention de réseau en une pluralité de tâches de sous-vérification à l'aide d'un ensemble d'étiquettes qui définissent l'intention de réseau ;

la génération (204) d'un ensemble de configurations normalisées pour une pluralité de dispositifs de réseau dans un réseau cible sur la base d'un ensemble de configurations actuelles pour la pluralité de dispositifs de réseau, la génération de l'ensemble de configurations normalisées comprenant la conversion de l'ensemble de configurations actuelles en l'ensemble de configurations normalisées à l'aide d'un langage de modélisation de données ;

la génération (206) d'un graphique de réseau sur la base de l'ensemble de configurations normalisées et d'une topologie du réseau cible ;

l'analyse (208) de la pluralité de tâches de sous-vérification et du graphique de réseau pour déterminer si l'ensemble de configurations actuelles pour la pluralité de dispositifs de réseau satisfait l'au moins une intention de réseau ;

si l'au moins une intention de réseau n'est pas satisfaite, la génération (212) d'un rapport indiquant que le réseau cible n'est pas conforme ; et

si l'au moins une intention de réseau est satisfaite, la fourniture d'informations indiquant que le réseau cible est conforme.

2. Procédé selon la revendication 1, la décomposition d'au moins une intention de réseau comprenant en outre le découpage de l'au moins une intention de réseau en une pluralité de parties pour vérification.

3. Procédé selon la revendication 2, la décomposition de l'au moins une intention de réseau comprenant en outre la segmentation du réseau cible en une pluralité de segments.

4. Procédé selon la revendication 1, la modélisation de données se faisant en langage YANG.

5. Procédé selon la revendication 1, le langage de modélisation de données comportant au moins une extension dirigée vers au moins une fonction d'une fonction de réseau.

6. Procédé selon la revendication 1, un résolveur de satisfiabilité modulo des théories, SMT, étant utilisé pour analyser l'ensemble des tâches de sous-vérification et le graphique de réseau pour déterminer si l'ensemble de configurations actuelles pour la pluralité de dispositifs de réseau satisfait l'au moins une intention de réseau.

7. Procédé selon la revendication 1, la décomposition d'au moins une intention de réseau en une pluralité de tâches de sous-vérification comportant la réception de l'au moins une intention de réseau et la réception de l'ensemble d'étiquettes.

8. Procédé selon la revendication 7, l'au moins une intention de réseau étant définie par un service de gestion d'intention et l'ensemble d'étiquettes étant généré par un service de gestion d'étiquettes.

9. Procédé selon la revendication 1, l'ensemble de configurations de réseau actuelles et la topologie du réseau cible étant fournis par un système de gestion de réseau.

10. Système de vérification d'intentions de réseau comprenant :

un décomposeur (118) pour décomposer au moins une intention de réseau en une pluralité de tâches de sous-vérification à l'aide d'un ensemble d'étiquettes qui définissent l'intention de réseau ;
un normaliseur de configuration (124) pour générer un ensemble de configurations normalisées pour une pluralité de dispositifs de réseau dans un réseau cible sur la base d'un ensemble de configurations actuelles pour la pluralité de dispositifs de réseau en convertissant l'ensemble de configurations actuelles en l'ensemble de configurations normalisées à l'aide d'un langage de modélisation de données ;
un créateur de graphique de réseau (128) couplé au normalisateur de configuration, le créateur de graphique de réseau étant destiné à générer un graphique de réseau sur la base de l'ensemble de configurations normalisées et d'une topologie du réseau cible ;
un résolveur de satisfiabilité modulo des théories, SMT (134), couplé au décomposeur et au créateur de graphique de réseau, le résolveur SMT étant destiné à analyser l'ensemble de configurations normalisées et le graphique de réseau étant destiné à déterminer des violations de l'au moins une intention de réseau par l'ensemble de configurations actuelles pour la pluralité de dispositifs de réseau ; et
un analyseur de violation (138) couplé au résolveur SMT, l'analyseur de violation étant destiné à générer un rapport identifiant les violations.

11. Système selon la revendication 10, le décomposeur recevant l'au moins une intention de réseau d'un service de gestion d'intention.

12. Système selon la revendication 10, le décomposeur recevant l'ensemble d'étiquettes d'un service de gestion d'étiquettes.

13. Système selon la revendication 10, le normalisateur de configuration recevant l'ensemble de configurations de réseau actuelles d'un système de gestion de réseau et le créateur de graphique de réseau recevant la topologie du réseau cible d'un système de gestion de réseau.

14. Support de stockage lisible par ordinateur comprenant des instructions qui, lorsqu'elles sont exécutées par un ordinateur, amènent l'ordinateur à effectuer le procédé selon l'une quelconque des revendications 1 à 9.

102

DECOMPOSER

~118

CONFIGURATION NORMALIZER

~124

126~

NETWORK GRAPH BUILDER

128

130

132

134~ SMT SOLVER

~136

VIOLATION ANALYZER

~138

FIG. 1A

FIG. 1B

202

DECOMPOSE NETWORK INTENT INTO A PLURALITY
OF SUB-VERIFICATION TASKS

204

GENERATE A SET OF NORMALIZED CONFIGURATIONS FOR A
PLURALITY OF NETWORK DEVICES

206

GENERATE A NETWORK GRAPH BASED ON THE NORMALIZED
CONFIGURATIONS AND A NETWORK TOPOLOGY

208

ANALYZE THE SUB-VERIFICATION TASKS AND NETWORK GRAPH
TO DETERMINE IF THE NETWORK INTENTS ARE SATISFIED

210

SATISFIED? — YES

NO

212

ANALYZE VIOLATIONS AND MAKE A REPORT

END

FIG. 2

FIG. 3

FIG. 4

EP 3 522 452 B1

FIG. 5

FIG. 6

FIG. 7

EP 3 522 452 B1

**EP 3 522 452 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016241436 A

- US 10374872 B

**Non-patent literature cited in the description**

- **SAEED AREZOUMAND.** *MD-IDN: Multi-domain intent-driven networking in software-defined infrastructures*

- **S. HARES OF HUAWEI.** Intent-Based Nemo Overview; draft-hares-ibnemo-overview-01.txt. Internet Engineering Task Force